# EUROPÄISCHE PATENTANMELDUNG

(11) **EP 1 087 406 A1**
(43) Veröffentlichungstag der Anmeldung: **28.03.2001**
(21) Anmeldenummer: 00120030.2
(22) Anmeldetag: 14.09.2000
(51) Int. Cl.: G21C 3/328, G21C 3/322

(54) **Brennelement mit Brennstäben für einen Siedewasserreaktor**

(30) Priorität: 24.09.1999 DE 19945902
(71) Anmelder: SIEMENS AKTIENGESELLSCHAFT, 80333 München (DE)
(72) Erfinder: Kreuter, Dieter, Dipl.-Ing., 63322 Rödermark (DE)

(57) **Zusammenfassung**

Zur Umverteilung (U) einer Kühlmittelströmung von einem ersten Bereich (3C) in einen zweiten Bereich (5C), insbesondere bei Siedewasserreaktor-Brennelementen (1C) mit einem außermittig angeordnetem Wasserkanal (R) ist ein zu einer Diagonalen (W) spiegelsymmetrisch aufgebautes Brennstabbündel (15) vorgesehen, wobei der Abstand benachbarter Brennstäbe (B,B1,B2) insbesondere entlang der Diagonale (W) monoton zunimmt und/oder das Brennstabbündel (15) als Ganzes entlang der Diagonale (W) außermittig versetzt ist. Zum Ausgleich von Asymmetrien im Reaktorkern ist eine Umverteilung von Kühlmittel auch bei Druckwasserreaktor-Brennelementen vorteilhaft.

## Beschreibung

Die Erfindung betrifft ein Brennelement mit praktisch parallel zu einer Brennelementachse und praktisch senkrecht zu einem zur Brennelementachse senkrechten, polygonalen Innenquerschnitt angeordneten Brennstäben. Dabei ist in einem ersten Bereich das Verhältnis der freien Fläche des Innenquerschnitts zu der von Brennstäben durchsetzten Fläche geringer als in einem zweiten Bereich.

Es ist bekannt, daß zur Verbesserung der Thermohydraulik und der Neutronenökonomie bei einem Brennelement der Abstand zwischen den Brennstäben - insbesondere im Verhältnis zum Radius des Hüllrohrs - variabel, aber für ein Brennelement konstant eingestellt werden kann (EP 0 373 418 B1). Dies dient insbesondere der Verkleinerung des Druckverlustes, der Verbesserung des Moderationsverhältnisses und der Verringerung der Neutronenabsorbtion durch das Strukturmaterial. Dabei ist es von Vorteil, wenn eine möglichst homogene Situation hinsichtlich der Thermohydraulik und der Neutronenökonomie über den Querschnitt des Reaktorkerns und insbesondere über den Querschnitt eines Brennelements erreichbar ist.

Dies ist aber in der Regel nicht der Fall, sondern die thermohydraulischen und neutronenökonomischen Eigenschaften des Reaktorkerns weisen eine Vielzahl von Inhomogenitäten und Asymmetrien auf.

Eine solche Inhomogenität oder Asymmetrie kann beispielsweise in einem Druckwasser-Brennelement durch die Anordnung von Steuerstäben, Instrumentierungsrohren oder anderen Rohren ohne Brennstoff entstehen. Bei einem Siedewasserreaktor-Brennelement kann beispielsweise die Anordnung von Steuerstäben zwischen benachbarten Brennelementen die Ursache für einen anisotropen Neutronenfluß sein. Inhomogenitäten und Asymmetrieen können bei Leichtwasserreaktoren und/oder Leichtwasserreaktor-Brennelementen beispielsweise auch durch eine Verteilung von unterschiedlich angereicherten und/oder mit Neutronengift versehenen Brennstäben über den Querschnitt des Brennelements entstehen.

Zur Behebung dieser oder ähnlicher Inhomogenitäten sind verschiedene Naßnahmen bekannt, welche die Ursache einer Inhomogenität berücksichtigen. Z.B. ist es nach der US-5,094,805 bekannt, bei einem Druckwasserreaktor-Brennelement den Abstand zwischen einem Steuerstab und einem dem Steuerstab benachbarten Brennstab geringer auszuführen, als einen Abstand zwischen zwei benachbarten Brennstäben.

Eine solche Maßnahme resultiert üblicherweise in einer im wesentlichen zentrosymmetrischen Verteilung von Brennstäben, welche auf die Behebung einer durch eine zentrosymmetrische Verteilung von Steuerstäben verursachte Inhomogenität hinwirkt.

Ein ähnlicher Ansatz ist in der EP 0 196 655 A1 für ein Druckwasserreaktor-Brennelement angegeben, bei dem der Querschnitt von einem einem Steuerstab benachbarten Brennstab verringert und damit die Brennstoffmenge in der Nähe eines Steuerstabs verringert ist. Der Abstand des Brennstabs zu einem benachbarten Steuerstab vergrößert sich dadurch. Auch hier liegt eine im wesentlichen zentrosymmetrische Größen- und/ oder Abstandsverteilung der Brennstäbe zur Behebung einer im wesentlichen zentrosymmetrischen Inhomogenität vor (z.B. Figur 6 der EP 0 196 655).

Auch für ein Siedewasserreaktor-Brennelement ist eine im wesentlichen zentrosymmetrische Brennstoff- und/oder Hüllrohrgrößenverteilung vorgesehen (Figur 5 der EP 0 196 655). Dabei ergibt sich eine geringfügige Abweichung lediglich an einer Randecke eines solchen Siedewasserreaktor-Brennelements, um eine Inhomogenität auszugleichen, die durch einen benachbarten Steuerstab im Zentrum einer Vierergruppe solcher Siedewasserreaktor-Brennelemente verursacht ist.

Die bisher bekannten Maßnahmen zur Behebung einer Inhomogenität bei der Thermohydraulik und/oder der Neutronenökonomie betreffen also im wesentlichen zentrosymmetrische Verteilungen von Brennstababständen und/oder Größen, höchstens mit lokal begrenzten Abweichungen von der Zentrosymmetrie, die zur Behebung von stark lokal begrenzten Einflüssen - beispielsweise am Rand eines Siedewasserreaktor-Brennelements durch einen Steuerstab - dienen.

Inhomogenitäten der Thermohydraulik und Neutronenökonomie eines Leichtwasserreaktor-Brennelements lassen sich jedoch nicht immer mit einer im wesentlichen zentrosymmetrischen oder lokal stark eingegrenzten Variation eines Brennstabquerschnitts oder eines Abstands benachbarter Brennstäbe auf befriedigende Weise beheben. Denn die räumliche Reichweite einer Maßnahme läßt sich in ihren Auswirkungen zumeist nicht lokal beschränken und ist zudem für Thermohydraulik und Neutronenökonomie womöglich unterschiedlich.

Wird nämlich eine solche Maßnahme getroffen, weil z.B. der Neutronenfluß über das Volumenverhältnis von Moderator zu Brennstoff in einem bestimmten Sinn beeinflußt werden soll, so wird gleichzeitig auch über die für das Kühlmittel zur Verfügung stehenden Strömungsquerschnitte auch der Strömungswiderstand und die Strömungsverteilung in einem Ausmaß beeinflußt, das möglicherweise nicht optimal ist. Eine erhöhte Moderation in einem Bereich des Brennelements kann dort zu einer höheren Leistung und zu stärkerer Bildung von Dampf führen, zu dessen schnellem Abtransport eine höhere Strömungsgeschwindigkeit wünschenswert wäre, als durch eine Vergrößerung des Brennstab-Abstands erreichbar ist.

Die Erfindung geht von der überraschenden Überlegung aus, daß sich ein Brennelement der eingangs genannten Art verbessern läßt.

Es ist Aufgabe der Erfindung ein Leichtwasserreaktor-Brennelement anzugeben, das sowohl eine verbesserte Thermohydraulik als auch eine verbesserte Neutronenökonomie aufweist.

Diese Aufgabe wird erfindungsgemäß von einem Brennelement der eingangs genannten Art dadurch gelöst, daß der erste Bereich eine erste Ecke des Innenquerschnitts bildet und andere Ecken des Innenquerschnitts von dem zweiten Bereich gebildet werden. Außerdem ist ein Abstand zwischen den Außenflächen jeweils zweier benachbarter Brennstäbe - in einer Richtung von der ersten Ecke des Brennelements ausgehend - monoton zunehmend. Dies ist insbesondere entlang einer Diagonalen und/oder einer Seite des Innenquerschnitts der Fall.

Ein Brennstab ist dabei praktisch senkrecht zu dem polygonalen Innenquerschnitt angeordnet und durchsetzt diesen mit der Brennstabquerschnittsfläche. Damit liegt eine freie, dem Kühlwasser zugängliche Fläche des Innenquerschnitts und eine von Brennstäben durchsetzte Fläche des Innenquerschnitts vor.

Die Erfindung geht dabei von der Erkenntnis aus, daß es zur Lösung der Aufgabe günstig ist, eine Umverteilung der Kühlmittel- und Moderatorströmung bei einem LeichtwasserreaktorBrennelement der eingangs genannten Art aus dem ersten Bereich zu dem zweiten Bereich hin zu bewirken, was durch eine Verringerung der freien Fläche im ersten Bereich und die Anordnung des ersten Bereichs in der ersten Ecke des Innenquerschnitts bei dem eingangs genannten Brennelement erreicht wird. Dies ist günstig bei einer Kühlmittelströmung, die praktisch eine Zweiphasen-Strömung ist, also eine Strömung mit einem hohen Dampfanteil (z.B. bis zu etwa 40 % bis 50 %). Bei solch einer Zweiphasen-Strömung, wie sie insbesondere bei einem Siedewasserreaktor-Brennelement auftritt, wird insbesondere der Dampf in den zweiten Bereich ausweichen, da der Dampf eine geringere Trägheit der Masse aufweist als der flüssige Anteil der Kühlmittelströmung. Dieser Effekt soll durch das Brennelement der oben genannten Art nach der Erfindung unterstützt und verstärkt werden.

Auch bei einer Kühlmittelströmung mit einem vergleichsweise geringen Dampfanteil (z.B. bis zu 5 %), die praktisch eine Einphasen-Strömung bildet, wie sie beispielsweise bei einem Druckwasserreaktor-Brennelement auftritt, ist ein oben genanntes Brennelement nach der Erfindung günstig, da auch das flüssige Kühlmittel von dem ersten Bereich in den zweiten Bereich gedrängt wird. Daher kann insbesondere eine asymmetrische Inhomogenität in einem Brennelement und/oder einem Reaktorkern durch die genannte asymmetrische Anordnung des ersten und zweiten Bereichs bei einem Brennelement der oben genannten Art nach der Erfindung ausgeglichen werden.

Als besonders vorteilhaft erweist es sich, in dem ersten Bereich einen Abstand zwischen den Außenflächen jeweils zweier benachbarter Brennstäbe im Mittel geringer auszuführen, als in dem zweiten Bereich. Im Mittel wird also vor allem der Abstand der Brennstäbe im ersten Bereich geringer sein, als in dem zweiten Bereich. Auf diese Weise wird das Kühlmittel (und zwar hauptsächlich der Dampfanteil im Kühlmittel) von dem ersten Bereich in den zweiten Bereich gedrängt.

Betreffend den monoton zunehmenden Abstand zwischen den Außenflächen jeweils zweier benachbarter Brennstäbe ist es günstig, daß die Brennstäbe des Brennelements einen gleichen Durchmesser haben, wobei der Abstand der Außenflächen jeweils zweier benachbarter Brennstäbe in der oben genannten Weise variabel ist. Es ist ebenso vorteilhaft, daß die Brennstäbe einen gleichen Mittelpunktsabstand haben und der Durchmesser der Brennstäbe variabel ist. Beispielsweise können dabei die Brennstäbe in dem ersten Bereich einen größeren Brennstabdurchmesser haben als in dem zweiten Bereich.

Nach einer Weiterbildung der Erfindung kann beispielsweise ein erster Brennstab, welcher auf der Diagonalen der ersten Ecke am nächsten sitzt, einen relativ kleinen Abstand zwischen seiner Außenfläche und der Außenfläche eines zweiten benachbarten Brennstabs auf der Diagonalen aufweisen. Der Abstand der Außenfläche des zweiten Brennstabs auf der Diagonalen zur Außenfläche eines dritten benachbarten Brennstabs auf der Diagonalen kann dann genauso groß oder größer sein als der Abstand zwischen den Außenflächen des ersten und des zweiten Brennstabs. Es ist insbesondere vorteilhaft, wenn der Abstand zwischen jeweils zwei benachbarten Brennstäben von der ersten Ecke des Brennelements ausgehend entlang einer Richtung entsprechend einer linearen, konvexen oder konkaven Funktion des entlang der Richtung zurückgelegten Weges zunimmt. Auf diese Weise ist der Abstand zwischen den Außenflächen des vorletzten Brennstabs und des letzten Brennstabs auf der Diagonalen in der Nähe der ersten Ecke gegenüberliegenden Ecke größer als der Abstand zwischen den Außenflächen des ersten und des zweiten Brennstabs auf der Diagonalen.

Günstigerweise ist dabei die Anordnung der Brennstäbe über den Innenquerschnitt praktisch spiegelsymmetrisch zu einer von der ersten Ecke ausgehenden Diagonale des Innenquerschnitts. Insbesondere erweist sich ein praktisch quadratischer Innenquerschnitt als vorteilhaft. Es ist aber beispielsweise auch möglich, daß ein sechseckiger Innenquerschnitt vorliegt.

Nach einer Weiterbildung der Erfindung hat ein einer ersten, von der ersten Ecke ausgehenden Seite, benachbarter Brennstab einen kleineren Abstand von dieser ersten Seite des Innenquerschnitts, als ein einer zweiten Seite benachbarter Brennstab von dieser zweiten Seite des Innenquerschnitts. Es kann also bei dieser Möglichkeit günstigerweise die Mittelachse des aus Brennstäben aufgebauten Brennstabbündels seitlich gegenüber dem Mittelpunkt des Innenquerschnitts versetzt sein und seine Berandung kann von einer ersten von der ersten Ecke ausgehenden Seite einen größeren Abstand aufweisen als von einer zweiten Seite, die nicht von der ersten Ecke ausgeht. Ein Brennstabbündel kann also in der eben genannten Weise so angeordnet sein, daß es den Innenquerschnitt eines Brennelements außermittig durchsetzt.

Es ist aber in einer weiteren Möglichkeit auch günstig, wenn in dem ersten Bereich ein Abstand zwischen den Außenflächen jeweils zweier benachbarter Brennstäbe im Mittel geringer ist, als in dem zweiten Bereich, insbesondere bei einer der oben genannten Weiterbildungen der Erfindung, und dabei das Brennstabbündel im Ganzen den Innenquerschnitt des Brennelements mittig durchsetzt.

Vorteilhaft sind beide oben genannten Möglichkeiten miteinander kombiniert, so daß in einem ersten Bereich das Verhältnis der freien Fläche des Innenquerschnitts zu der von Brennstäben durchsetzten Fläche geringer ist, als in einem zweiten Bereich und der erste Bereich eine erste Ecke des Innenquerschnitts bildet und andere Ecken von dem zweiten Bereich gebildet werden.

Insbesondere weist dabei ein Brennelement nach einer Weiterbildung der Erfindung eine zu den Brennstäben praktisch parallele Wasserrohr-Anordnung auf. Dies kann beispielsweise ein Brennelement entsprechend der Französischen Patentschrift FR 1.276.233, oder entsprechend der Deutschen Auslegeschrift DE 21 29 809 sein. Insbesondere kann es sich dabei auch um ein Brennelement entsprechend der US-Schrift US 5,289,514 handeln oder auch um ein Brennelement entsprechend der Europäischen Patentschrift EP 0 224 728 B1. Insbesondere bei den zwei letztgenannten Ausführungsformen eines Brennelements handelt es sich um ein Brennelement mit einem Wasserrohr, welches den Innenquerschnitt zentral durchsetzt. Eine Wasserrohr-Anordung muß nicht immer aus einem einzigen runden oder rechteckigen Wasserrohr bestehen, viel mehr sind auch andere (z.B. kreuzförmige) Querschnitte oder Anordnungen mit mehreren Rohren möglich (vergleiche z.B. EP 0 458 086 B1). Als besonders günstig erweist sich auch ein Brennelement der oben genannten Art mit einer zu den Brennstäben praktisch parallelen, seitlich gegenüber der Brennelementachse versetzten Wasserrohr-Anordnung, wie es beispielsweise in der Europäischen Patentschrift EP 0 713 600 B1 oder der Internationalen Anmeldung WO95/04992 beschrieben ist.

Dabei ist insbesondere der erste Bereich polygonal, und grenzt mit einer gegenüber der ersten Ecke liegenden Ecke an eine Wasserrohr-Anordnung. Vorteilhaft ist der erste Bereich quadratisch. Darüber hinaus ist vorteilhaft der zweite Bereich polygonal und weist einen Teilbereich auf, der eine der ersten Ecke gegenüberliegende Ecke bildet. In dem genannten Teilbereich ist vorteilhaft das Verhältnis der freien Fläche des Innenquerschnitts zu der von Brennstäben durchsetzten Fläche größer, als in einem anderen Teilbereich mit ähnlicher Fläche des Innenquerschnitts.

Bei den eben genannten Weiterbildungen der Erfindung, insbesondere bei einem Brennelement mit einer gegenüber der Brennelementachse seitlich versetzten Wasserrohr-Anordnung ist also der erste Bereich im wesentlichen auf der Diagonalen auf jener Seite der Wasserrohr-Anordnung angeordnet, welche einen geringeren Abstand der Mittelachse der Wasserrohr-Anordnung zum Rand des Innenquerschnitts hat. Der zweite Bereich umfaßt praktisch den restlichen Innenquerschnitt des Brennelements, wobei der genannte Teilbereich, in dem das Verhältnis der freien Fläche des Innenquerschnitts zu der von Brennstäben durchsetzten Fläche am größten ist, im wesentlichen auf der Diagonalen und auf jener Seite der Wasserrohr-Anordnung angeordnet ist, auf der die Mittelachse der Wasserrohr-Anordnung den größeren Abstand zum Rand des Innenquerschnitts aufweist.

Bei der weiteren Ausgestaltung des erfindungsgemäßen Brennelements sind die Brennstäbe in zu einander praktisch parallelen Zeilen und zu den Zeilen praktisch senkrechten Spalten angeordnet. Dabei ist ein Brennstab in einer praktisch rechteckigen Masche eines Abstandhaltergitters gehalten. Vorteilhaft ist ein Brennstab dabei in der Mitte der Masche gehalten.

Es erweist sich weiterhin als günstig, daß die Fläche einer Öffnung einer Masche im ersten Bereich im Mittel geringer ist, als in dem zweiten Bereich. Die mittlere Öffnung einer Masche ergibt sich dabei im Wesentlichen als die Gesamtfläche der Maschenöffnungen durch die Anzahl der Maschen in dem jeweiligen Bereich. Insbesondere befinden sich die kleinsten Maschen im ersten Bereich und die größten Maschen im zweiten Bereich.

Günstigerweise ist also die Maschengröße (d.h. die Öffnung einer Masche) jeweils der Anordnung der Brennstäbe in dem ersten Bereich und bzw. dem zweiten Bereich angepaßt. Vorteilhaft ist eine derartige Anpassung durch entsprechende Abstandhalterelemente - beispielsweise Noppen oder Federn - ergänzt.

Anhand einer Zeichnung werden vorteilhafte Ausführungsformen der Erfindung näher erläutert. Die Figuren zeigen zum Teil schematisch:
- FIG 1: eine Ausführungsform eines Brennelements, bei dem ein Abstand zwischen den Außenflächen jeweils zweier Nachbar-Brennstäbe streng monoton zunimmt und die Brennstäbe einen gleichen Durchmesser haben,
- FIG 2: eine Ausführungsform eines Brennelements ähnlich der in Figur 1, bei welcher der Abstand monoton zunimmt,
- FIG 3: eine weitere Ausführungsform eines Brennelements mit einem mittigen Wasserrohr, wobei der Durchmesser der Brennstäbe unterschiedlich ist und der Abstand konvex zunimmt,
- FIG 4: eine Ausführungsform eines Brennelements mit einem aussermittigen Wasserrohr und einem außermittig der Achse des Brennelements angeordneten Brennstabbündel.

Gleiche Element tragen in den Figuren jeweils gleiche Bezugszeichen.

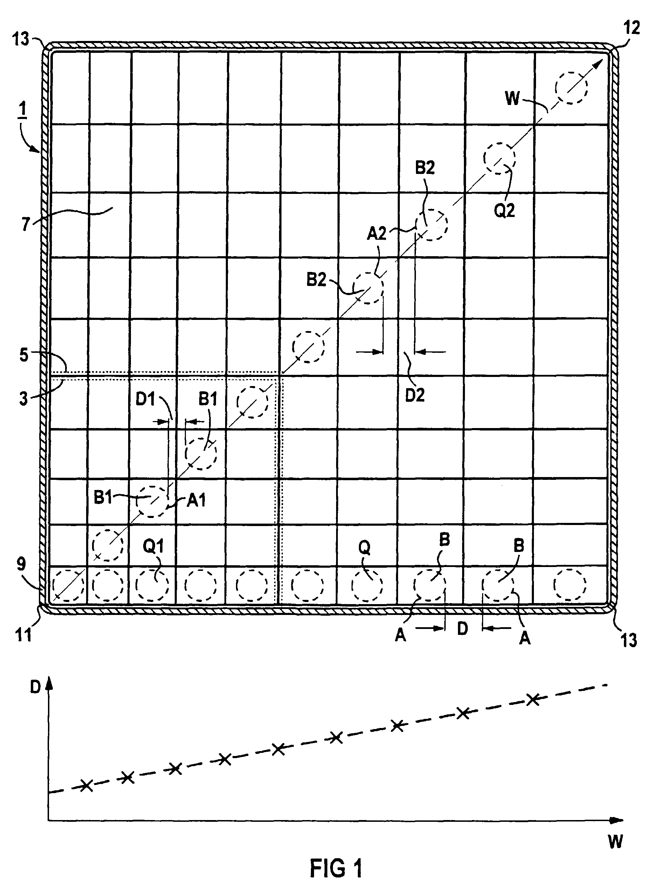

Bei dem Ausführungsbeispiel eines Brennelements 1 in Figur 1 ist ein Schnitt quer zur Brennelementachse mit Brennstäben und Abstandhalter gezeigt. Die Brennstäbe B sind dabei praktisch parallel zu einer Brennelementachse angeordnet. Diese Achse steht senkrecht zu einem polygonalen Innenquerschnitt 7, welcher bei dieser Ausführungsform praktisch von der Innenkante eines Brennelementkastens 9 berandet ist. Die Brennstäbe B sind damit auch praktisch senkrecht zu dem bei dieser Ausführungsform quadratischen Innenquerschnitt 7 angeordnet und durchsetzen den Innenquerschnitt 7 auf einer Fläche, welche jeweils durch den Querschnitt Q eines Brennstabs B gegeben ist. Die Summe aller Querschnitte Q1 in dem ersten Bereich 3 ergibt die von Brennstäben B1 durchsetzte Fläche. Die übrige Fläche bildet die freie Fläche des ersten Bereichs 3. Die Summe aller Querschnitte Q2 ergibt die von Brennstäben B2 durchsetzte Fläche in dem zweiten Bereich 5.

Der erste Bereich 3 und der zweite Bereich 5 bilden zusammen praktisch den Innenquerschnitt 7. Der erste Bereich 3 bildet dabei praktisch eine erste Ecke 11 des Innenquerschnitts 7. Die anderen Ecken 12,13 des Innenquerschnitts 7, insbesondere die der ersten Ecke 11 gegenüberliegende Ecke 12, werden von dem zweiten Bereich 5 gebildet. Da bei dem gezeigten Ausführungsbeispiel ein Abstand D zwischen den Außenflächen A jeweils zweier benachbarter Brennstäbe B insbesondere entlang der Diagonalen W des Innenquerschnitts 7 des Brennelements 1 von der ersten Ecke 11 des Brennelements 1 ausgehend zur gegenüberliegenden Ecke 12 hin monoton zunimmt, ist in dem ersten Bereich 3 das Verhältnis der freien Fläche des Innenquerschnitts 7 zu der von Brennstäben B1 durchsetzten Fläche geringer als in einem zweiten Bereich 5.

Insbesondere ist in dem ersten Bereich 3 ein Abstand B1 zwischen den Außenflächen A1 jeweils zweier benachbarter Brennstäbe B1 im Mittel geringer, als ein Abstand B2 zwischen den Außenflächen A2 jeweils zweier benachbarter Brennstäbe B2 im zweiten Bereich 5. Dabei ist der Querschnitt Q eines Brennstabs B über den gesamten Innenquerschnitt 7 des Brennelements 1 konstant. Wie die Graphik unterhalb des Brennelements 1 in Figur 1 zeigt, nimmt aber der Abstand D zwischen jeweils zwei am Nähesten benachbarten Brennstäben B - also der 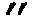 Nächste Nachbar"-Abstand - entlang der Diagonalen W des Innenquerschnitts 7 zu. Der Abstand D als Funktion des Weges nimmt bei dieser Ausführungsform sogar linear zu.

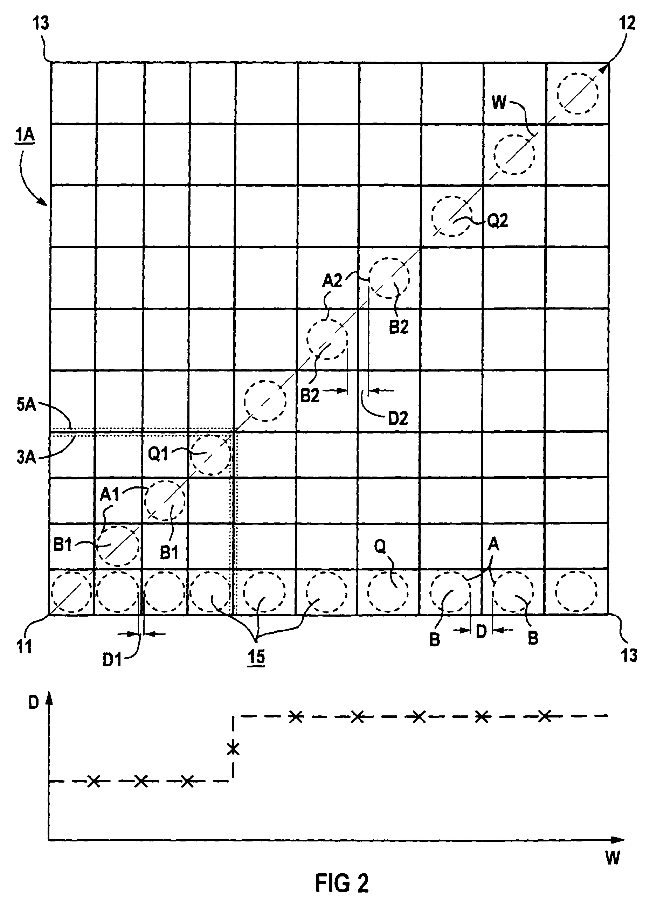

Nach dem in Figur 2 gezeigten Ausführungsbeispiel eines Brennelements 1A nimmt entsprechend der Graphik in Figur 2 der Abstand D zwischen den Außenflächen A jeweils zweier benachbarter Brennstäbe B in einer Richtung von der ersten Ecke 11 des Brennelements 1 ausgehend zur gegenüberliegenden Ecke 12 hin nicht streng monoton, sondern nur monoton zu. In dem ersten Bereich 3A hat der Abstand D den konstanten Wert D1 und vergrößert sich dann abrupt an der Grenze zu einem zweiten Bereich 5A, in dem der Abstand D einen ebenfalls konstanten, aber größeren Wert D2 hat. Dies verdeutlicht die Auftragung von D entlang der Diagonalen W in einer Grafik in Figur 2. Bei dieser Ausführungsform stimmt der Abstand D1 mit dem mittleren Abstand zwischen den Außenflächen A1 jeweils zweier benachbarter Brennstäbe B1im ersten Bereich 3A überein. Ebenso stimmt der Abstand D2 mit dem mittleren Abstand zwischen den Außenflächen A2 zweier benachbarter Brennstäbe 32 im zweiten Bereich 5A überein. Sowohl in dem Ausführungsbeispiel der Figur 1 als auch in dem der Figur 2 haben alle Brennstäbe B des Brennelements 1 den gleichen Querschnitt Q und damit den gleichen Durchmesser.

Figur 2 zeigt eine Ausführungsform eines Brennelements 1A im wesentlichen mit einem Brennelementbündel 15 mit 10 x 10 Positionen für Brennstäbe B - wieder als ein Schnitt quer zur Brennelementachse. Die Darstellung in Figur 2 gilt aber genauso für ein Druckwasserreaktor-Brennelement. Ein entsprechendes Brennstabbündel würde bei einem Druckwasserreaktor-Brennelement beispielsweise 17 x 17 oder 18 x 18 Brennstäbe B umfassen, mit zwischen den Brennstäben B angeordneten Steuerstäben. Es kann dabei beispielsweise von einem Brennelement gemäß der US-Schrift US 4,849,161 ausgegangen werden, wobei die Anordnung der Brennstäbe auf die erfindungsgemäße Weise modifiziert ist - in einem Ausschnitt beispielsweise wie in Figur 2.

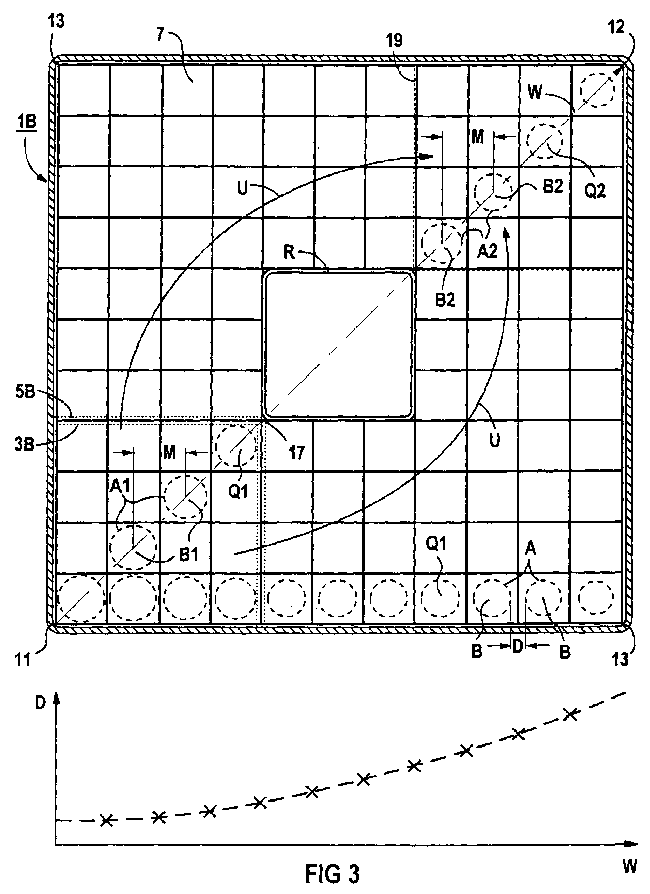

Nach dem in Figur 3 gezeigten Ausführungsbeispiel eines Brennelements 1B nimmt der Abstand D zwischen den Außenflächen jeweils zweier benachbarter Brennstäbe B von der ersten Ecke 11 des Brennelements 1 ausgehend zu einer Ecke 12 hin entlang der Diagonale W des Innenquerschnitts 7 entsprechend einer konvexen Funktion in Abhängigkeit des Weges entlang der Diagonalen W zu (Grafik in Figur 3). Bei dieser Ausführungsform 1B ist zwar der Mittelpunktsabstand M zweier benachbarter Brennstäbe B1 in dem ersten Bereich 3B der gleiche wie der Mittelpunktsabstand M zweier benachbarter Brennstäbe B2 in dem zweiten Bereich 5B, jedoch weist der Querschnitt Q1 eines Brennstabs B1 in dem ersten Bereich 3B einen größeren Wert auf, als der Querschnitt Q2 eines Brennstabs B2 in dem zweiten Bereich 5B. Dies führt zu der in der Grafik in Figur 3 gezeigten konvexen Zunahme des Abstandes D entlang der Diagonalen W des Innenquerschnitts 7 bei der Ausführungsform 1B des Brennelements.

Bei den in den Figuren 1 bis 3 gezeigten Ausführungsformen 1, 1A und 1B eines Brennelements ist jeweils die Anordnung der Brennstäbe 3 über den Innenquerschnitt 7 praktisch spiegelsymmetrisch zu einer von der ersten Ecke 11 zu einer gegenüberliegenden Ecke 12 gehenden Diagonale W des Innenquerschnitts 7 der jeweiligen Ausführungsform 1, 1A, 1B, wobei der Innenquerschnitt 7 jeweils praktisch quadratisch ist.

Die in Figur 3 gezeigte Ausführungsform eines Brennelements 1 weist zudem ein zu den Brennstäben B dieser Ausführungsform praktisch paralleles Wasserrohr R auf. Gemäß der erläuterten Anordnung der Brennstäbe B1 in dem ersten Bereich 3B und der Brennstäbe B2 in dem zweiten Bereich 5 ist das Verhältnis der freien Fläche des Innenquerschnitts 7 zu der von Brennstäben B1 durchsetzten Fläche in dem ersten Bereich 3B geringer als das entsprechende Verhältnis der freien Fläche des Innenquerschnitts 7 zu der von Brennstäben B2 durchsetzten Fläche in dem zweiten Bereich 5B. Da der erste Bereich 3B eine erste Ecke 11 des Innenquerschnitts bildet und insbesondere mit einer inneren Ecke 17, die gegenüber der ersten Ecke 11 liegt, an das Wasserrohr R grenzt, ist der offene Durchflußquerschnitt in dem ersten Bereich 3B wesentlich geringer als in dem zweiten Bereich 5B und insbesondere in einem Teilbereich 19 des zweiten Bereichs 5B. Der Teilbereich 19 hat zwar die gleiche Grundfläche wie der erste Bereich 3B. Da aber das Verhältnis der freien Fläche des Innenquerschnitts 7 zu der von Brennstäben B2 durchsetzten Fläche im Teilbereich 19 größer ist als in dem ersten Bereich 3B, ist der Durchflußquerschnitt in dem Teilbereich 19 größer als in dem ersten Bereich 3.

Aufgrund dieser Unterschiede ergibt sich ein Druckgefälle vom ersten Bereich 3B zum zweiten Bereich 5B, insbesondere zum Teilbereich 19 hin. Dies führt zu einer Umverteilung U der Strömung eines Kühlmittels aus dem ersten Bereich 3B zum Teilbereich 19 hin - also in den Bereich 5B. Insbesondere der in einer Zweiphasen-Strömung vorhandene Dampfanteil weicht besonders schnell in den zweiten Bereich 5B aus, da er eine wesentlich geringere Trägheit der Masse hat als der flüssige Anteil des Kühlmittels. Je nach Wahl einer Zunahme des Abstands D entlang einer Richtung, insbesondere der Diagonalen W, läßt sich die Umverteilung U genau dosieren. Beispiele für die unterschiedliche Zunahme eines Abstands D ist jeweils in einer Grafik in Figur 1, 2, 3 und 4 gezeigt.

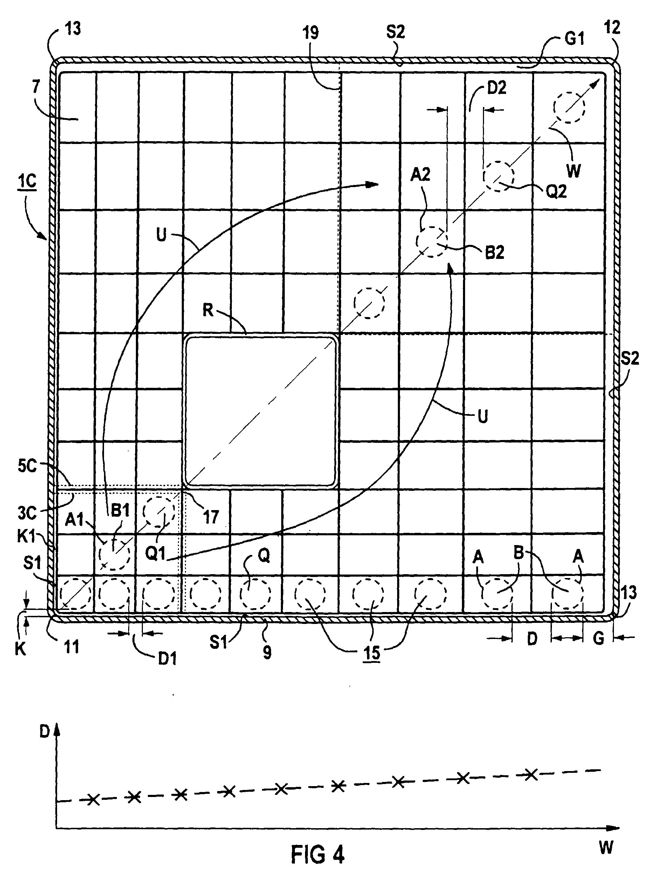

Die Figur 4 zeigt ein weiteres Ausführungsbeispiel eines Brennelements 1C. In diesem Fall weist das Brennelement 1C ein außermittig der Brennelementachse sitzendes Wasserrohr R auf. Außerdem ist das Brennstabbündel 15 als Ganzes entlang der Diagonalen W des Innenquerschnitts 7 des Brennelements 1 in Richtung des ersten Bereichs bzw. der ersten Ecke 11 gerückt, also von der gegenüberliegenden Ecke 12 weggerückt. Diese Maßnahme führt bei dieser Ausführungsform dazu, daß in dem ersten Bereich 3C das Verhältnis der freien Fläche des Innenquerschnitts 7 zu der von Brennstäben B1 durchsetzten Fläche geringer ist als in dem zweiten Bereich 5C. In diesem Fall ist nämlich der Spalt K1 zwischen dem äußeren Rand des Brennstabbündels 15 und einer von der ersten Ecke 11 ausgehenden Seite S1 geringer als der Abstand G1 des äußeren Rands des Brennstabbündels 15 von einer zweiten Seite S2, die von einer gegenüber der ersten Ecke 11 liegenden anderen Ecke 12 ausgeht. Dabei hat insbesondere ein einer ersten Seite S1 benachbarter Brennstab B einen kleineren Abstand K von dieser ersten Seite S1 als ein einer zweiten Seite S2 benachbarter Brennstab B, der den Abstand G von dieser zweiten Seite S2 aufweist.

Da bei dem Ausführungsbeispiel 1C durch ein verschobenes Brennstabbündel 15 als Ganzes entlang einer Diagonalen W zum ersten Bereich 3C hin bereits teilweise eine Umverteilung U der Kühlmittelströmung von dem ersten Bereich 3C in den zweiten Bereich 5C erreicht wird, kann eine Änderung eines Abstands D zwischen den Außenflächen A zweier benachbarter Brennstäbe B weniger ausgeprägt sein, als beispielsweise bei der Ausführungsform in Figur 1 nötig wäre, um ungefähr die gleiche Umverteilung zu erreichen. Dies ist für das Ausführungsbeispiel 1C der Grafik in Figur 4 zu entnehmen, bei welcher der Abstand D als Funktion des Weges entlang der Diagonale W linear steigt. Allerdings ist die Steigung von D als Funktion des Weges entlang W geringer als beim Ausführungsbeispiel des Brennelements 1 in Figur 1.

## Patentansprüche

1. Brennelement (1,1A,1B,1C) mit praktisch parallel zu einer Brennelement-Achse und praktisch senkrecht zu einem zur Brennelement-Achse senkrechten, polygonalen Innenquerschnitt (7) angeordneten Brennstäben (B,B1,B2), wobei in einem ersten Bereich (3,3A,3B,3C) das Verhältnis der freien Fläche des Innenquerschnitts (7) in dem ersten Bereich (3,3A,3B,3C) zu der von Brennstäben (B,B1,B2) durchsetzten Fläche in dem ersten Bereich (3,3A,3B,3C) geringer ist als in einem zweiten Bereich (5,5A,5B,5C),
**dadurch gekennzeichnet**, daß der erste Bereich (3,3A,3B,3C) eine erste Ecke (11) des Innenquerschnitts (7) bildet und andere Ecken (13) von dem zweiten Bereich (5,5A,5B,5C) gebildet werden, und ein Abstand (D,D1,D2) zwischen den Außenflächen (A,A1,A2) jeweils zweier benachbarter Brennstäbe (B,B1,B2), in einer Richtung, insbesondere entlang einer Diagonalen (W) und/oder einer Seite (S1) des Innenquerschnitts (7), von der ersten Ecke (11) des Brennelements (1,1A,1B,1C) ausgehend monoton zunimmt.

2. Brennelement (1) nach Anspruch 1, **gekennzeichnet durch**, einen Abstand (D) zwischen den Außenflächen (A) jeweils zweier benachbarter Brennstäbe (B), der in dem ersten Bereich (3,3A,3B,3C)im Mittel geringer ist, als in dem zweiten Bereich (5,5A,5B,5C).

3. Brennelement nach einem der vorhergehenden Ansprüche, **dadurch gekennzeichnet,** daß die Brennstäbe (B,B1,B2) des Brennelements (1,1A,1C) einen gleichen Durchmesser (Q) haben.

4. Brennelement nach Anspruch 1 oder 3, **dadurch gekennzeichnet,** daß der Abstand zwischen den Außenflächen (A,A1,A2) jeweils zweier benachbarter Brennstäbe (B,B1,B2) von der ersten Ecke (11) des Brennelements (1,1A,1B,1C) ausgehend, entlang einer Richtung (W,S1) entsprechend einer linearen, konvexen oder konkaven Funktion zunimmt.

5. Brennelement (1) nach einem der vorhergehenden Ansprüche, **dadurch gekennzeichnet,** daß die Anordnung der Brennstäbe (B,B1,B2) auf dem Innenquerschnitt (7) praktisch spiegelsymmetrisch zu einer von der ersten Ecke ausgehenden Diagonale (W) des Innenquerschnitts (7) ist.

6. Brennelement (1) nach einem der vorhergehenden Ansprüche, **dadurch gekennzeichnet,** daß der Innenquerschnitt (7) praktisch quadratisch ist.

7. Brennelement (1) nach einem der vorhergehenden Ansprüche, **dadurch gekennzeichnet,** daß ein erster einer ersten, von der ersten Ecke (11) ausgehenden Seite (S1) benachbarter Brennstab (B) einen kleineren Abstand (K) von der ersten Seite (S1) hat, als ein zweiter einer zweiten Seite (S2) benachbarter Brennstab (B) von der zweiten Seite (S2).

8. Brennelement (1) nach einem der vorhergehenden Ansprüche, **gekennzeichnet durch** eine zu den Brennstäben (B,B1,B2) praktisch parallele, insbesondere seitlich gegenüber der Brennelement-Achse versetzte WasserrohrAnordnung (R).

9. Brennelement (1) nach einem der vorhergehenden Ansprüche, **dadurch gekennzeichnet,** daß der erste Bereich (3,3A,3B,3C) polygonal, insbesondere quadratisch ist und mit einer gegenüber der ersten Ecke (11) liegenden Ecke (17) an eine wasserrohr-Anordnung (R) grenzt.

10. Brennelement (1) nach einem der vorhergehenden Ansprüche, **dadurch gekennzeichnet,** daß der zweite Bereich (5,5A,5B,5C) polygonal ist und in einem Teilbereich (19), der eine der ersten Ecke (11) gegenüber liegende Ecke (12) des zweiten Bereichs (5,5A,5B,5C) bildet, das Verhältnis der freien Fläche des Innenquerschnitts (7) in dem Teilbereich (19) zu der von Brennstäben (B,B1,B2) durchsetzten Fläche in dem Teilbereich (19) am größten ist.

11. Brennelement (1) nach einem der vorhergehenden Ansprüche, **dadurch gekennzeichnet,** daß die Brennstäbe (B,B1,B2) in zueinander praktisch parallelen Zeilen und zu den Zeilen praktisch senkrechten Spalten angeordnet und ein Brennstab (B,B1,B2) in einer praktisch rechteckigen Masche eines Abstandhalter-Gitters gehalten ist, insbesondere in der Mitte der Masche.

12. Brennelement (1) nach Anspruch 11, **dadurch gekennzeichnet,** daß die Fläche einer Öffnung der Masche im ersten Bereich (3,3A,3B,3C) im Mittel geringer ist, als in dem zweiten Bereich (5,5A,5B,5C).
